(19)

Europäisches
Patentamt
European
Patent Office
Office européen
des brevets

(11) **EP 2 360 129 A1**

(12) **EUROPEAN PATENT APPLICATION**

(43) Date of publication:
**24.08.2011 Bulletin 2011/34**

(51) Int Cl.:
*C04B 20/10* (2006.01)          *E01C 7/18* (2006.01)
*E01C 1/00* (2006.01)

(21) Application number: **10154460.9**

(22) Date of filing: **24.02.2010**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(71) Applicant: **Greenpave B.V.
7031 JB Wehl (NL)**

(72) Inventor: **Braam, Bernardus Jacobus Maria
6551 AC Weurt (NL)**

(74) Representative: **Ketelaars, Maarten F.J.M.
Nederlandsch Octrooibureau
J.W. Frisolaan 13
2517 JS  Den Haag (NL)**

(54) **Aggregate material for road construction**

(57)     The present invention relates to an aggregate material comprising a furnace slag having a porosity of about 2% to about 40% as determined according to test method NEN-EN 1097-3 and comprising a photo-catalytic composition. The present invention further relates to a process for the preparation of an aggregate material comprising a furnace slag having a porosity of about 2% to about 40% as determined according to test method NEN-EN 1097-3, wherein the furnace slag is treated with an aqueous photo-catalytic composition and subsequently aged. The present invention also relates to the use of the aggregate material according to the invention in road construction including road surfaces, road barriers, bridges, and viaducts, roofing applications and to roads comprising the aggregate material according to the invention.

EP 2 360 129 A1

**Description**

**Field of the invention**

The present invention relates to an aggregate material for road construction which has good noise reduction properties, excellent photo-catalytic activity, good heat conducting properties, high roughness and a high strength. The present invention also relates to a process for manufacturing said aggregate material and its application in road construction.

**Background of the invention**

Aggregate materials used for road construction must comply with a great variety of requirements. For example, the European standard "Aggregates for bituminous mixtures and surface treatments for roads, airfields and other trafficked areas" is NEN-EN 13043-2002 and the scope of this standard is to specify the properties of aggregates and filler aggregates obtained by processing natural or manufactured or recycled materials for use in bituminous mixtures and surface treatments for roads, airfields and other trafficked areas. This standard does not cover the use of reclaimed bituminous mixtures. The requirements set out in this standard are based upon experience with aggregate types with an established pattern of use. In principle, the standard should be used with care when considering the use of aggregates from sources with no such pattern of use, e.g. recycled aggregates and aggregates arising from certain industrial by-products. Requirements for coarse and fine aggregate materials include (1) geometrical requirements, e.g. size (to be determined as the ratio $d/D$ of the upper sieve size D and the lower sieve size d which must be at least 1.4) and flakiness index FI (which defines the shape of coarse aggregate material), (2) physical requirements, e.g. resistance to fragmentation (as defined by the Los Angeles coefficient and polishing stone values (as defined by PSV values), resistance to wear (as defined by the micro-Deval coefficient $M_{DE}$), and (3) chemical requirements.

Not only crushed stone is used as aggregate material, also recycled glass, waste from iron and steel production, i.e. slag such as furnace slag and steel slag. There is no standard for these kinds of materials such as NEN-EN 13043-2002. As is well known, steel slag differs from furnace slag because the former contain significant amounts of calcium oxide (lime) and magnesium oxide which may get hydrated and eventually may lead to cracks in a road surface. See for example US 5.478.392, incorporated by reference herein. Currently, electric arc furnace slag is a material of choice in road construction because of its excellent properties with respect to noise reduction, roughness and strength and low lime contents.

Another development seen in recent years in road construction is providing aggregate material with catalytic properties. For example, US 6.454.489 (equivalent to EP 919.667 A1), incorporated by reference herein, discloses an $NO_x$-cleaning paving structure which comprises a surface layer, said surface layer comprising cement, titanium dioxide powder and aggregate material. The surface layer may further comprise common inorganic additives such as Portland blast furnace slag cement and blast furnace slag. The titanium oxide employed may be titanium monoxide or titanium dioxide. Instead of these oxides, metatitanic acid or orthotitanic acid may be used. The amount of titanium oxide used is 5 - 50 parts by weight of titanium oxide powder relative to 100 parts by weight of cement. The methods employed in US 6.454.489 have the disadvantage that relatively high amounts of photo-catalyst must be used and that these methods are only suitable for surface layers. This implies that first a base layer of the road must be constructed prior to the application of the surface layer comprising the photo-catalyst.

JP 2001-048608, incorporated by reference herein, discloses an aggregate material comprising a photo-catalyst selected from the group of titanium oxide, zinc oxide, tin oxide or a mixture thereof. The photo-catalyst may be present inside the aggregate material or the aggregate material may be coated with a layer comprising the photo-catalyst. The disadvantage of the material according to JP 2001-048608 is that high amounts of the photo-catalyst are required which is economically unattractive or that a complicated, inefficient method must be employed to provide the aggregate material with a layer comprising the photo-catalyst. In addition, if the aggregate material according to JP 2001-048608 is used only in the surface layer, it also suffers from the disadvantage that first a base layer comprising common aggregate material must be constructed.

EP 1.752.429, incorporated by reference, discloses a process for the preparation of a photo-catalytic bituminous road surface wherein an asphalt layer containing gaps, wherein the gaps preferably occur near the surface of the asphalt layer, is provided with a layer of a cement containing photo-catalytic material, preferably titanium dioxide. An important disadvantage of the process of EP 1.752.429 is in particular that it requires high amounts of photo-catalyst and that it can economically only be applied for the construction of surface layers.

The present invention overcomes the disadvantages of the prior art processes in that significantly lower amounts of photo-catalyst are necessary in the manufacture of aggregate material having excellent photo-catalytic activity.

**Summary of the invention**

The present invention relates to an aggregate material comprising a furnace slag having a porosity of about 2% to about 40% (as determined according to a test method as described below) and a photo-catalytic composition. The present invention further relates to a process for the preparation of an aggregate material comprising a furnace slag having a porosity of about 2% to about 40%, wherein the furnace slag is treated with an aqueous photo-catalytic composition and subsequently aged. The present invention also relates to the use of the aggregate material according to the present invention in road construction and to roads comprising the aggregate material according to the invention.

**Detailed description of the invention**

The verb "to comprise" as is used in this description and in the claims and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there is one and only one of the elements. The indefinite article "a" or "an" thus usually means "at least one".

*The furnace slag*

According to the present invention, the furnace slag is preferably an electric arc furnace slag. It is preferred that the furnace slag has a porosity of at least about 2 %, more preferably at least about 5 %, even more preferably at least about 7 % and most preferably at least about 9 %. It is also preferred that the porosity is not higher than about 40 %, preferably not higher than about 20 %.

Porosity is herein defined as a measure of the void spaces in the furnace slag particles, and is a fraction of the volume of voids over the total volume of the furnace slag particles. The porosity is expressed in a percentage. For example, solid granite has a porosity of about 1 % whereas clay has a porosity of more than about 50 %.

Hence, the term "porosity" used in this document refers to the intraparticle voids present in dry aggregate material. The porosity of the furnace slag is measured by employing a pycnometer as is used in ASTM D854. A pycnometer is well known in the art and constitutes a flask of a known volume and of a known weight (w1). The flask is subsequently filled with a sample of the furnace slag and weighed again (w2), so that the weight of the sample is known (w2 —w1). Subsequently, the flaks is filled with water (the density of water is about 1 kg/dm$^3$; the furnace slag is insoluble in water) and then evacuated to remove any air or gas. The flask is then weighed again (w3) and by subtracting w3 from w2 the weight (and hence the volume) of the displaced water can be calculated. When the volume of the displaced water is subtracted from the volume of the flask (which is known), one obtains the maximum volume (and the maximum density or specific gravity since the weight of the sample was measured) of the furnace slag material.

The density of a large piece of furnace slag material is determined by measuring the apparent weight thereof and the reduced weight (due to buoyancy) when immersed in water. According to Archimedes' principle, the apparent weight minus the reduced weight is the weight of the displaced water. Since the density of water is known, the density of the slag material can then be calculated as follows:

$$\frac{density\ of\ furnace\ slag}{density\ of\ water} = \frac{apparent\ weight}{apparent\ weight - reduced\ weight}$$

By subtracting the density (as measured with the immersion method which is similar to hydrostatic weighing) from the maximum density (as determined with the pycnometer), one obtains the volume occupied by the voids within the furnace slag material.

The test method NEN-EN 1097-3, however, is designed to measure the loose bulk density of dry aggregate material and to the calculation of the interparticle voids present between dry aggregate material particles. The weight of an empty watertight cylindrical container made of corrosion-resistant metal and of a defined size is determined. The container is then placed on a horizontal surface and filled with the dry aggregate material. Any surplus of aggregate material is removed and the surface of the aggregate material is levelled. The weight of the filled container is then determined. The loose bulk density $\rho_b$ is then calculated as follows:

$$\rho_b = \frac{m_2 - m_1}{V}$$

wherein $m_2$ is the weight of the container containing the dry aggregate material, $m_1$ is the weight of the empty container and V the volume of the container. The percentage of voids v is then calculated as follows:

$$v == \frac{\rho_p - \rho_b}{\rho_b}$$

wherein $\rho_p$ is the loose bulk density and pp is the pre-dried density (110°C).

It is further preferred that the furnace slag has a density of 2 - 5 kg/dm$^3$, more preferably 3 — 4 kg/dm$^3$, as determined by standard test method NEN-EN 1097-3. The furnace slag has preferably a polished stone value of at least 48 (PSV$_{48}$), more preferably at least 53, more preferably at least 58 and most preferably at least 62. The polished stone value is determined according to test method NEN-EN 1097-8. It is furthermore preferred that the size of the aggregate material as expressed as *d/D* (according to NEN-EN 13043-2002) is at least 1.4 and 44. The largest size *D* is preferably 1 - 22.

In addition, it is preferred that the furnace slag has an aggregate crushing value according the UK test BS 812 of at least 28. However, the test for determining the aggregate crushing value is no longer a European standard and instead the test according to NEN-EN 1097-2 is applied for determining the Los Angeles coefficient. It is therefore preferred that the furnace slag has a Los Angeles coefficient of 30 or less (LA$_{30}$). Another important parameter is the aggregate impact value which is not included in NEN-EN 1097-2. Although there is no accepted relationship between Los Angeles coefficients and aggregate impact values, according to a paper of U. De Silva Jayawardena of the University of Peradeniya, Sri Lanka, incorporated by reference, which was presented at the International Geololical Congress, August 4th - 14th Oslo, 2008, the Los Angeles coefficient is about 1.45 times the aggregate impact value.

Because the furnace slag has a higher porosity than common aggregate materials, the photo-catalytic composition may be present in the pores of the furnace slag and/or on the surface of the furnace slag. It is preferred, however, that the aggregate material is provided with an outer layer comprising the photo-catalytic composition. The high porosity is advantageous with respect to noise reduction.

According to a particular preferred embodiment of the present invention, the furnace slag is preferably treated such that the pores of the furnace slag comprise a non-photo-catalytic composition and that the furnace slag is provided with an outer layer comprising the photo-catalytic composition.

The photo-catalytic composition comprises a photo-catalyst, preferably selected from titanium oxides, zinc oxides, tin oxides and mixtures thereof. Preferably, the photo-catalyst is a titanium oxide, more preferably titanium dioxide and most preferably amorphous titanium dioxide.

The furnace slag has preferably good adhering properties to binders used in road construction, e.g. bitumen, polymer and/or resin modified bitumen (wherein the resin is a synthetic or a natural resin), "white bitumen" consisting of natural or synthetic polymers and an oil, and the like. The furnace slag has preferable also a freakish shape, a high resistance against deformation and a high heat conductance and/or a high heat capacity. A high heat conductance and/or a high heat capacity is advantageous since heat can be more efficiently removed from the road body and/or stored into the road body under high temperature circumstances which frequently occur during summer. This reduces wheel track formation and increases rutting resistance.

The aggregate material according to the present invention preferably comprises at least 50 wt.% of the furnace slag, based on the total weight of the aggregate material. Most preferably, the aggregate material consists essentially of the furnace slag.

*Process for the preparation of the furnace slag*

The present invention also provides a process for the preparation of an aggregate material comprising a furnace slag having a porosity of more than 2 %, wherein the furnace slag is treated with an aqueous photo-catalytic composition and subsequently aged. The term "aged" involves a hardening or curing treatment under ambient conditions during 1 day to four weeks, preferably 2 days to two weeks, wherein the photo-catalytic composition is hardened. In this step, water reacts with components comprised by the photo-catalytic composition (also known as "hydration" as occurs in the formation and hardening of concrete). In the process, the furnace slag particles may be coated with the photo-catalytic composition and/or the pores of the furnace slag may be filled with the photo-catalytic composition.

Because the furnace slag used in the present invention has a rather high porosity compared to common aggregate materials which have a porosity of less than about 2 %, relatively high amounts of binder are usually necessary for producing an asphalt that complies with the requirements set by authorities. As will be apparent to the person skilled in the art, the binder will penetrate the relatively large pores of the furnace slag where it will not contribute to the adhesion to aggregate material. Since binders are usually one of the most expensive components of asphalt, this is economically not very attractive. Hence, if at least the pores of the furnace material are filled with the photo-catalytic composition, this could be economically beneficial since the necessary amount of binder is lowered.

According to a preferred embodiment of the present invention, however, the furnace slag is pretreated with an aqueous non-photo-catalytic composition to reduce the amount of the photo-catalytic composition necessary for the production of the aggregate material, where after the pretreated furnace slag is preferably aged. As explained above, during ageing hardening occurs.

In this pretreatment, at least the pores of the furnace slag particles are filled with the non-photo-catalytic composition. Obviously, in this process the surface furnace slag particles may optionally (partly) be coated with the non-photo-catalytic composition if that cannot be circumvented. The process according to this preferred embodiment of the present invention has the additional advantage that, besides reduced amounts of binder, also relatively low amounts of the photo-catalytic composition is necessary to obtain an effective aggregate material.

According to this preferred embodiment, the ageing step may besides the hardening outlined above also include a mechanical treatment to prevent complete hardening of the non-photo-catalytic composition, e.g. during storage.

According to the present invention, the aqueous photo-catalytic composition and/or the aqueous non-photo-catalytic composition comprise a mortar, preferably a cement mortar.

More preferably, the aqueous non-photo-catalytic composition has a Water-to-Cement ratio (or Water-to-Cement factor) within the range of about 50% to about 85%, more preferably about 60% to about 80%. The Water-to-Cement ratio is defined as the ratio of the weight of water and the weight of the mortar in the aqueous non-photo-catalytic composition. The Water-to-Cement ratio is a well known characteristic in concrete production. In normal concrete, the Water-to-Cement ratio is usually less than 50%, i.e. typically 30% - 45 %.

Also more preferably, the aqueous photo-catalytic composition comprises about 1 to about 5 wt.% of the photo-catalyst, more preferably about 1.5 wt.% to about 4 wt.%, based on the total weight of the cement mortar.

The cement mortar may further comprise fine aggregate material such as sand, usual additives such as plasticizers, hydration accelerators such as $CaCl_2$, pigments and the like.

The present invention also relates to an aggregate material obtainable by the process of the present invention.

*Applications*

The present invention also relates to the use of the aggregate material according to the present invention in road construction including road surfaces, road barriers, bridges, and viaducts, and in roofing applications.

The present invention also relates to roads comprising an aggregate material according to the invention. As will be understood by the person skilled in the art, the aggregate material may only be used as a surface layer.

**Example**

Furnace slag having a porosity of 20% is treated with an ordinary mortar cement (Water-to-Cement ratio is 70%) - the aqueous non-photo-catalytic composition in a weight ratio of 92% furnace slag and 4% mortar cement. The obtained mixture is the aged and subsequently treated with a mortar cement (Water-to-Cement ratio is 70%) which contains 2.8% (w/w) amorphous titanium dioxide - the aqueous photo-catalytic composition. The obtained mixture is aged after which it is ready for use.

**Claims**

1.    Aggregate material comprising a furnace slag having a porosity of about 2% to about 40% and comprising a photo-catalytic composition.

2.    Aggregate material according to Claim 1, wherein the furnace slag is an electric arc furnace slag.

3.    Aggregate material according to Claim 1 or Claim 2, wherein the photo-catalytic composition is present in the pores of the furnace slag.

4. Aggregate material according to any one of Claims 1 - 3, wherein the furnace slag is provided with an outer layer comprising the photo-catalytic composition.

5. Aggregate material according to Claim 1 or Claim 2, wherein the pores of the furnace slag comprise a non-photo-catalytic composition and wherein the aggregate material is provided with an outer layer comprising the photo-catalytic composition.

6. Aggregate material according to any one of Claims 1 - 5, wherein the photo-catalytic composition comprises titanium dioxide as photo-catalytic material.

7. Aggregate material according to Claim 6, wherein the titanium dioxide is amorphous titanium dioxide.

8. Process for the preparation of an aggregate material comprising a furnace slag having a porosity of more than 5 %, wherein the furnace slag is treated with an aqueous photo-catalytic composition and subsequently aged.

9. Process according to Claim 8, wherein the furnace slag is pretreated with an aqueous non-photo-catalytic composition.

10. Process according to Claim 9, wherein the pretreated furnace slag material is aged.

11. Process according to any one of Claims 8 - 10, wherein the aqueous photo-catalytic composition and/or the aqueous non-photo-catalytic composition comprises a mortar.

12. Process according to Claim 11, wherein the mortar is a cement mortar.

13. Aggregate material obtainable by the process of any one of Claims 8 - 12.

14. Use of the aggregate material according to any one of Claims 1 - 6 or 13 in road construction.

15. Road comprising an aggregate material according to any one of Claims 1 - 6 or 13.

Europäisches
Patentamt

European
Patent Office

Office européen
des brevets

**EUROPEAN SEARCH REPORT**

Application Number

EP 10 15 4460

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | JP 11 061708 A (FUJIKON KK)<br>5 March 1999 (1999-03-05)<br>* abstract *<br>* claims 1-3 *<br>* paragraphs [0009], [0012] - [0016], [0029] * | 1,3-8,<br>13-15<br><br>9,11,12 | INV.<br>C04B20/10<br>E01C7/18<br>E01C1/00 |
| X<br><br><br><br>Y | WO 2008/142205 A1 (KEMIRA PIGMENTS OY [FI]; CEMENTA AB [SE]; BOEOEK TOMMY [FI]; ERIKSSON) 27 November 2008 (2008-11-27)<br>* abstract *<br>* page 6, line 12 - line 14 *<br>* page 10, line 25 - page 11, line 16 *<br>* claims 1,5,6,9,10,13,17-20 * | 1,4,6<br><br><br><br>2,7,14,<br>15 | |
| Y | JP 6 102561 B (GODO SEITETSU)<br>14 December 1994 (1994-12-14)<br>* abstract *<br>* paragraphs [0007], [0008] * | 2,14,15 | |
| Y | DE 198 00 868 A1 (SICOWA VERFAHRENSTECH [DE]) 15 July 1999 (1999-07-15)<br>* abstract *<br>* column 1, line 46 - line 52 *<br>* claims 1,5 * | 2 | TECHNICAL FIELDS SEARCHED (IPC)<br><br>C04B<br>E01C |
| Y | JP 2003 096707 A (BAU KENSETSU KK; FUKUDA ROAD CONSTRUCTION; NISSHIN KASEI KK)<br>3 April 2003 (2003-04-03)<br>* abstract *<br>* paragraphs [0014], [0016], [0020], [0027], [0029], [0033], [0050] *<br>* claims 1,3,5,8 * | 7 | |

-/--

The present search report has been drawn up for all claims

| Place of search | Date of completion of the search | Examiner |
|---|---|---|
| The Hague | 22 July 2010 | Kolb, Ulrike |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 10 15 4460

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2003 336384 A (ISHIKAWAJIMA KENZAI KOGYO KK; ISHIKAWAJIMA HARIMA HEAVY IND) 28 November 2003 (2003-11-28) | 1,4-6 | |
| Y | * abstract * * paragraphs [0009], [0015], [0020] - [0023] * | 9,11,12 | |
| A | RACHEL, A.; LAVENDRINE, B.; SUBRAHMANYAM, M.; BOULE, P.: "Use of porous lavas as support of photocatalysts" CATALYSIS COMMUNICATIONS, vol. 3, no. 4, April 2002 (2002-04), pages 165-171, XP002592994 ISSN: 1566-7367 * abstract * | 1-15 | |
| A | DATABASE WPI Week 200703 Thomson Scientific, London, GB; AN 2007-022993 XP002593310 HONG C H: "High strength and low water absorption concrete ceramics using scoria coarse aggregate" & KR 2006 014 473 A (HONG C H) 16 February 2006 (2006-02-16) * abstract * | 1-15 | **TECHNICAL FIELDS SEARCHED (IPC)** |
| A | US 2007/065640 A1 (JOEDICKE INGO B [US]) 22 March 2007 (2007-03-22) * abstract * | 1-15 | |

The present search report has been drawn up for all claims

| Place of search | Date of completion of the search | Examiner |
|---|---|---|
| The Hague | 22 July 2010 | Kolb, Ulrike |

EPO FORM 1503 03.82 (P04C01)

## ANNEX TO THE EUROPEAN SEARCH REPORT
## ON EUROPEAN PATENT APPLICATION NO.

EP 10 15 4460

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2010

| Patent document cited in search report | | Publication date | Patent family member(s) | | Publication date |
|---|---|---|---|---|---|
| JP 11061708 | A | 05-03-1999 | NONE | | |
| WO 2008142205 | A1 | 27-11-2008 | CA | 2687507 A1 | 27-11-2008 |
| | | | EP | 2155625 A1 | 24-02-2010 |
| | | | US | 2010137130 A1 | 03-06-2010 |
| JP 6102561 | B | 14-12-1994 | JP | 1968343 C | 18-09-1995 |
| | | | JP | 4349153 A | 03-12-1992 |
| DE 19800868 | A1 | 15-07-1999 | NONE | | |
| JP 2003096707 | A | 03-04-2003 | NONE | | |
| JP 2003336384 | A | 28-11-2003 | NONE | | |
| KR 2006014473 | A | | NONE | | |
| US 2007065640 | A1 | 22-03-2007 | US | 2007065641 A1 | 22-03-2007 |
| | | | US | 2010104857 A1 | 29-04-2010 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5478392 A
- US 6454489 B
- EP 919667 A1
- JP 2001048608 A
- EP 1752429 A